# EUROPÄISCHE PATENTSCHRIFT

(11) **EP 0 326 957 B1**
(45) Veröffentlichungstag und Bekanntmachung des Hinweises auf die Patenterteilung: **22.09.1993**
(21) Anmeldenummer: 89101412.8
(22) Anmeldetag: 27.01.1989
(51) Int. Cl.: B29D 30/06

(54) **Verfahren und Vorrichtung zum Vulkanisieren von Fahrzeugluftreifen**
Method and apparatus for vulcanising vehicle tyres
Procédé et dispositif pour vulcaniser des pneus pour véhicules

(30) Priorität: 30.01.1988 DE 3802777
(43) Veröffentlichungstag der Anmeldung: 09.08.1989
(73) Patentinhaber: Continental Aktiengesellschaft, 30165 Hannover (DE)
(72) Erfinder: Sergel, Horst, D-3000 Hannover (DE); Hoops, Klaus, D-3012 Langenhagen (DE); Hanebuth, Klaus, D-3050 Wunstorf 1 (DE); Nädler, Heinrich, D-3057 Neustadt 1 (DE)

(56) Entgegenhaltungen:
- EP-A- 0 182 026
- DE-A- 3 242 241

## Beschreibung

Die Erfindung betrifft ein Vulkanisierverfahren für Fahrzeugluftreifen, deren Reifenwülste in montierter Stellung am radial inneren Umfang einer Felge angeordnet sind, wobei der Reifenrohling mit seitlich nach außen geklappten Reifenwülsten vulkanisiert wird, unter Verwendung einer Heizpresse, die übliche Formenteile für die Außenbereiche des Rohlings sowie zwei axial verschiebbare Konturringe zur Abformung der Innenbereiche der Reifenwülste und einen Heizbalg aufweist und eine Vorrichtung zur Durchführung des Verfahrens.

In der EP-A-0 182 026 werden ein Vulkanisierverfahren und eine -vorrichtung für Fahrzeugluftreifen der in Rede stehenden Art beschrieben. Bei diesem bekannten Verfahren befinden sich die Reifenrohlinge in einer fahrkonturgerechten Vulkanisierstellung. Um dies zu erreichen ist es erforderlich, bei der Vulkanisierform radial geteilte Wulstformringe zu verwenden. Eine Vulkanisierform, bei der die Wulstformringe sowohl axial verfahrbar sind als auch in radialer Richtung verfahrbar sein müssen, bedingt jedoch einen äußerst komplizierten konstruktiven Aufwand.

Eine weitere Vorrichtung zum Vulkanisieren von Reifen der in Rede stehenden Art in einer Stellung mit seitlich nach außen geklappten Reifenwülsten ist der DE-OS 32 42 241 beschrieben. Die bekannte Vorrichtung weist zwei in axialer Richtung relativ zueinander verfahrbare, an einer Führungsstange bzw. an einem Rohr befestigte Teller auf, die an ihrem radial und axial äußeren Rand derart ausgebildet sind, daß sie ein metallisch glattes Abformen der Reifeninnenfläche im Wulstbereich erlauben. Auf den einander zugekehrten Seiten sind die beiden Teller mit Klemmringen zum Einspannen der Heizbalgränder versehen, und sie sind in radialer Richtung derart gestaltet, daß sie im zusammengefahrenen Zustand radial innen von den Klemmringen einen so großen Innenraum bilden, daß dort der drucklos gemachte Heizbalg untergebracht werden kann.

Dieser Aufbau einer Vulkanisierform birgt jedoch prinzipiell den Nachteil in sich, daß durch die relativ große Axialerstreckung der zusammengefahrenen Teller das Aufbringen eines Rohlings bzw. nach der Vulkanisation das Herausnehmen des fertigen Reifens erschwert wird. Als weitere Schwachstelle ist der kleine Innenraum zwischen den zusammengefahrenen Konturringen zu nennen, so daß die Gefahr besteht, daß der drucklos gemachte Heizbalg nicht vollständig in den Innenraum eintritt und dann beim Zusammenfahren der Teller gequetscht wird. Doch selbst bei einem vollständigen Eindringen in den Innenraum wird der Heizbalg derart stark gefaltet, daß auch dies zu einer Verringerung der Lebensdauer führen kann.

Der Erfindung liegt deshalb die Aufgabe zugrunde, ein Vulkanisierverfahren für Fahrzeugluftreifen der eingangs genannten Art anzugeben, bei dem für den Heizbalg Gefährdungen der geschilderten Art nicht mehr gegeben sind und bei dem das Einbringen des Reifenrohlings erleichtert ist.

Diese Aufgabe wird erfindungsgemäß dadurch gelöst, daß zum Beschicken der Heizpresse die Konturringe derart axial zusammen und in eine Position oberhalb der Vulkanisierposition gefahren werden, daß der evakuierte bzw. drucklose Heizbalg durch einen vom unteren Konturring begrenzten Raum nach unten hin wegtaucht, daß danach der Reifenrohling unter geringfügiger Ovalverformung des unteren Reifenwulstes über die Konturringe übergestülpt und anschließend durch axiale Abstandsvergrößerung der Konturringe unter Zentrierung der Wülste auf die Ringe aufgespannt wird, wobei gleichzeitig der Heizbalg in den Rohlingsinnenraum gelangt und daß anschließend der Rohling in die Vulkanisierstellung abgesenkt und die Heizform geschlossen und der Rohling unter Beaufschlagung der Form sowie des Heizbalgs mit einem Heizmedium vulkanisiert wird.

Eine Vorrichtung zur Durchführung des Verfahrens ist dadurch gekennzeichnet, daß der obere Konturring und die obere Heizbalgeinspannung direkt oder mittelbar am oberen Ende einer axial verfahrbaren Kolbenstange befestigt ist, daß die untere Heizbalgeinspannung sich an einem ebenfalls axial verschiebbaren Balgkopf befindet, daß der untere Konturring an einem Träger befestigt ist und daß der Träger und der Balgkopf relativ zueinander verschiebbar sind.

Die Erfindung bietet den Vorteil, daß wegen der geringen axialen Erstreckung der im wesentlichen scheibenringförmigen Konturringe ein Aufbringen des empfindlichen Reifenrohlings ohne große Verformungen möglich ist, so daß Materialverschiebungen und bleibende Verformungen an den Wülsten vermieden werden.

Ein weiterer Vorteil ist darin zu sehen, daß die untere Heizbalgeinspannung nicht mehr am unteren Konturring erfolgt, sondern an einem relativ dazu verfahrbaren Balgkopf. Dies in Verbindung mit dem scheibenringförmig ausgebildeten unteren Konturring, der ein Austreten des Heizbalgs nach unten hin erlaubt, schafft eine schonende Behandlung des Heizbalgs bei allen Schritten des Vulkanisierverfahrens. Es treten keine Faltungen und Quetschungen des Heizbalgs mehr auf, so daß seine Lebensdauer wesentlich erhöht wird. Hieraus wiederum ergibt sich ein seltenerer Heizbalgwechsel und damit eine selterner erforderliche Abschaltung der Heizpressen.

Gemäß einer bevorzugten Ausgestaltung der Erfindung erfolgt das Aufspannen des Rohlings auf die Konturringe und das Einleiten einer ersten Bombierstufe in einer Stellung, in der keinerlei äußere Formteile am Rohling anliegen, so daß er sich frei aufspannen und setzen kann, was zu einer Vergleichmäßigung führt.

Nachfolgend werden anhand einer Zeichnung eine erfindungsgemäße Vorrichtung sowie das mit ihr durchgeführte Vulkanisierverfahren näher erläutert.

Es zeigt schematisch
- Fig. 1: eine Vulkanisiervorrichtung mit einem eingelegten Reifenrohling in der Vulkanisierstellung in einem senkrechten Schnitt parallel zur Vorderseite der Vorrichtung,
- Fig. 2: die Vorrichtung nach Fig. 1, jedoch im geöffneten Zustand und mit zusammen- und herausgefahrenen Konturringen (Beschickungsposition),
- Fig. 3: eine geringfügig abgewandelte Vulkanisiervorrichtung der Beschickungsposition in einem senkrechten Schnitt, wobei sich links die Beschickungsseite befindet.

Der herzustellende Luftreifen, bei dem es sich überwiegend um einen Gürtelreifen mit einer Radialkarkasse handelt, die in den Wülsten 1 durch Umschlingen von zug- und druckfesten Kernen verankert ist, wird in einer Stellung mit seitlich nach außen geklappten Wülsten 1 (sogenannte Trapezstellung) vulkanisiert.

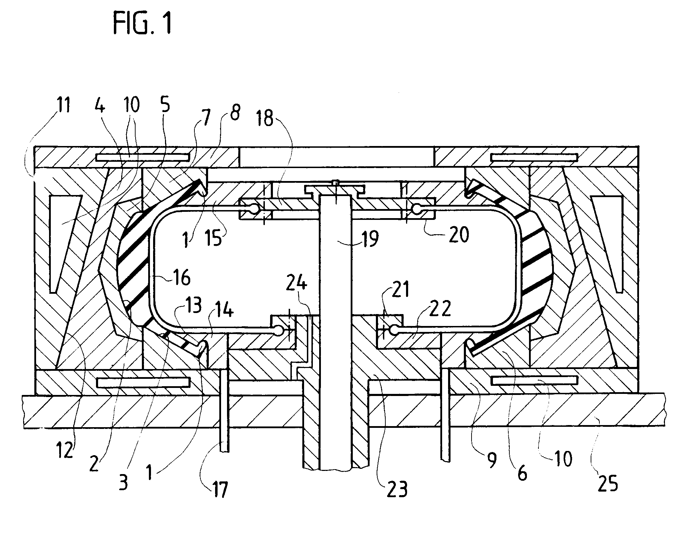

Zur Abformung der Außenfläche des Reifenrohlings, d.h. der Lauffläche 2 mit dem Profil und der Seitenwandflächen 3 dient eine im Vertikalschnitt im wesentlichen doppel-U-förmige Vulkanisierform, die vorliegend (Fig. 1) mit radial verfahrbaren Segmenten 4, die mit üblichen Profilformelementen 5 versehen sind, einer unteren Formschale 6 und einer oberen Formschale 7 ausgestattet ist. Die Vulkanisiervorrichtung weist weiterhin die obere und die untere Formschale 7, 6 umschließende und sie aufnehmende Halterringe 8, 9 auf, die mit Kanälen 10 zum Zuführen eines Heizmediums versehen sind. Ein Ring 11, der ebenfalls mit Heizkanälen 10 und weiterhin mit einer Schrägführung 12 ausgestattet ist, dient zum radialen Heranfahren der Segmente 4.

Da der zu vulkanisierende Reifen im fertigen Zustand mit den Wülsten 1 am radial inneren Umfang einer Felge angeordnet wird, befinden sich die Dichtflächen 13 zur Felge hin, die bei der Vulkanisation metallisch glatt abgeformt werden müssen, an der Reifeninnenwand im Wulstbereich. Zur metallisch glatten Abformung der Flächen 13 dienen ein scheibenringförmig ausgebildeter unterer Konturring 14 und ein oberer Konturring 15. Die übrige Reifeninnenwand wird in üblicher Weise mittels eines Heizbalgs 16 abgeformt, der mit einem Heizmedium beaufschlagbar ist und während der Vulkanisation den Reifenrohling gegen die äußeren Formteile 5, 6, 7 drückt.

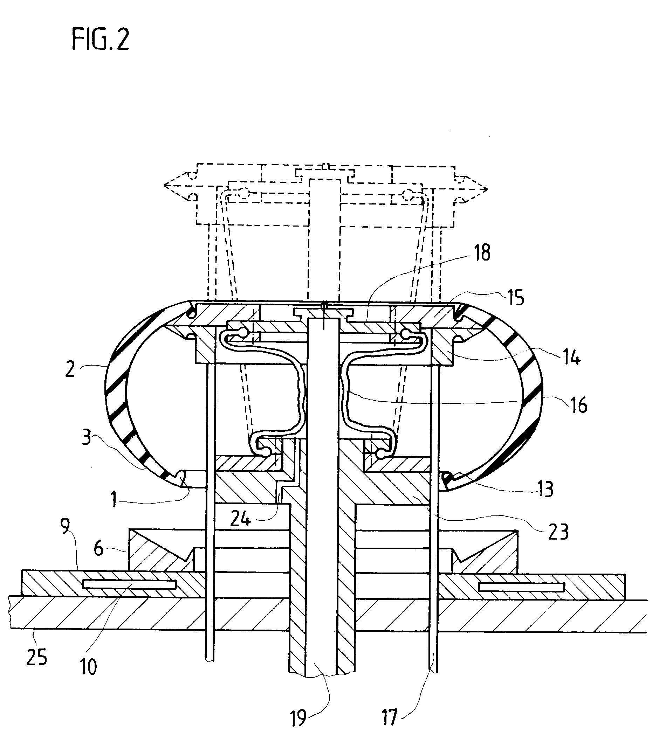

Der untere Konturring 14 ist im Beispiel der Figuren 1 und 2 links und rechts an zwei sich gegenüberliegenden Führungsstangen 17 befestigt, die mittels nicht gezeichneter Antriebselemente, z.B. Druckzylinder vertikal verfahrbar sind. Als Träger für den unteren Konturring 14 können auch mehr als zwei Stangen 17 oder zwei schalenartige Seitenwände vorgesehen werden. Der obere Konturring 15 befindet sich dagegen an einer Halteplatte 18, die wiederum am oberen Ende einer Kolbenstange 19 eines Balgstreckzylinders befestigt ist. Der Heizbalg 16 ist mit seinem oberen Rand ebenfalls an der Halteplatte 18 eingespannt, und zwar mittels eines Spannrings 20. Die Einspannung des unteren Heizbalgrandes erfolgt mit Hilfe von Einspannringen 21, 22, die sich an einem Balgkopf 23 befinden. Am oberen Heizbalgrand ist der Durchmesser, d.h. die Heizbalgöffnung wesentlich größer als am unteren. Der Balgkopf 23 weist weiterhin Zuleitungen 24 auf, über die der Heizbalg 16 mit Wasserdampf und Vakuum beaufschlagbar sind. Die Vulkanisiervorrichtung ist auf einem Pressentisch 25 angeordnet.

Der Balgkopf 23 ist mittels eines nicht gezeichneten Antriebs, z.B. eines oder mehrerer Druckzylinder vertikal verfahrbar, ebenso die Kolbenstange 19. Die Antriebe für den Balgkopf 23, die Kolbenstange 19 und die Führungsstangen 17 sind derart miteinander verkoppelt, daß beim Verfahren des Balgkopfes 23 die Kolbenstange 19 mit dem oberen Konturring 15 und die Führungsstangen 17 mit dem unteren Konturring 14 automatisch mitbewegt werden. Außerdem lassen sich die Kolbenstange 19 und die Führungsstangen 17 selbstverständlich auch separat vom Balgkopf 23 relativ zu diesem bewegen. Für die Funktionsweise der Vorrichtung ist es wichtig, daß der untere Konturring 14 und die untere Heizbalgeinspannung am Balgkopf 23 relativ zueinander verfahrbar sind, so daß der Heizbalg 16 beim Heranfahren des unteren Konturrings 14 an den oberen durch einen vom unteren Konturring 14 begrenzten Raum nach unten hin wegtauchen kann.

Nachfolgend werden die Funktionsweise der Vorrichtung bzw. das erfindungsgemäße Verfahren anhand der Fig. 1 und 2 näher erläutert.

Sollte die Vulkanisiervorrichtung noch nicht erwärmt sein, geschieht das Vorwärmen ohne Reifenrohling bei geschlossener Form, wobei die Wulstkonturringe 14, 15 sich in Heizposition (Fig. 1) befinden. Danach wird die Vulkanisierform durch Anheben der oberen Formschale 7 mit der oberen Halterung 8 unter gleichzeitigem radialem Auseinanderfahren der Segmente 4 geöffnet.

Anschließend wird der Balgkopf 23 in einer gemeinsamen Bewegung mit den beiden Konturringen 14, 15 in seine obere Position (= Bombierposition) gefahren. Danach wird die Kolbenstange 19 des Balgstreckzylinders mit dem oberen Konturring 15 separat weiter nach oben bewegt, wobei der Heizbalg 16 gestreckt wird (gestrichelte Stellung in Fig. 2). Gleichzeitig oder danach erfolgt eine Beaufschlagung des Heizbalgs 16 mit Vakuum, so daß alle Wandteile des Balgs das Bestreben haben, sich zusätzlich zur Mitte hin, d.h. in Richtung auf die Kolbenstange 19 zu verlagern. Hierdurch und wegen des kleineren Durchmessers der unteren Heizbalgöffnung ist beim anschließenden Hochfahren des unteren Konturrings 14 gewährleistet, daß der Heizbalg 16 nicht beschädigt werden kann. Die Bewegung des unteren Konturrings 14 endet am oberen Konturring 15 oder kurz davor. Danach wird der obere Konturring 15 mittels des Antriebs des Balgstreckzylinders auf Beschickungshöhe (ausgezogene Stellung in Fig. 2) abgesenkt, wobei der untere Konturring 14 mitgezogen wird.

In dieser Beschickungsstellung wird der Reifenrohling unter geringfügiger Ovalverformung des unteren Wulstes 1 über die Konturringe 14, 15 gestülpt, wobei sich der obere Wulst 1 in eine Nut des oberen Konturrings 15 legt. Anschließend wird der untere Konturring 14 in seine untere Position relativ zum Balgkopf 23 abgesenkt, wobei sich die Rohlingswülste 1 auf den Sitzflächen der Konturringe 14, 15 aufspannen.

In dieser Stellung wird die erste Bombierdruckstufe eingeleitet, bei der der Heizblag 16 mit ca. 0,3 bis 0,4 bar Dampf beaufschlagt wird. Weil der untere Konturring 14 sich hierbei noch oberhalb von seiner Vulkanisierstellung befindet, wird ein freies Setzen der Rohlingswülste 1 auf den Konturringen 14, 15 ermöglicht, d.h. das freie Anspannen des Reifenrohlings wird durch keinerlei äußere Teile der Vulkanisierform behindert, so daß sich nach der Vulkanisation Reifen mit günstigeren Fertigungstoleranzen ergeben.

Anschließend wird der Balgkopf 23 gemeinsam mit den beiden Konturringen 14, 15 und dem darauf aufgespannten Reifenrohling in die Heizstellung abgesenkt, wobei sich die untere Seitenwandfläche 3 des Reifenrohlings an die untere Formschale 6 anlegt. Danach wird die Vulkanisierform durch Absenken der oberen Formteile mit dem Haltering 8, der Formschale 7, dem Ring 11 und den Segmenten 4 geschlossen und der Rohling durch Zuführung eines Heizmediums in den Heizbalg 16 und in die Kanäle 10 fertigvulkanisiert.

Am Ende des Heizvorgangs wird der Heizbalg 16 wieder mit Vakuum beaufschlagt und die Heizform geöffnet. Der Balgkopf 23 wird gemeinsam mit den beiden Konturringen und dem darauf befindlichen vulkanisierten Reifen in die Endposition des Kopfes angehoben. Danach erfolgt ein Anheben des oberen und des unteren Konturrings, wobei der untere Konturring 14 gleichschnell oder schneller angehoben werden kann. Bei dieser Bewegung erfolgt gleichzeitig eine Streckung des Heizbalgs 16, und es kann außerdem eine Belüftung auf Atmosphärendruck durchgeführt werden. Schließlich wird der obere Konturring 15 unter Mitnahme des unteren auf die Entladeposition abgesenkt und der fertige Reifen entnommen. Die Entnahme des Reifens kann von vorne, bevorzugt jedoch von hinten aus erfolgen.

Nach dem Absenken der beiden Konturringe 14, 15 auf ihre Beschickungsposition kann eine erneute Beschickung erfolgen. Es sollte angemerkt werden, daß die Vorrichtung auch in der Weise betrieben werden kann, daß die Entladeposition und die Beschickungsposition für die Konturringe 14, 15 identisch ist. Beim vorstehend beschriebenen Verfahren ist deutlich geworden, daß die Kolbenstange 19 des Balgstreckzylinders in dem erläuterten Beispiel positioniert verfahrbar ist, und zwar für die Positionen Balgstrecken, Heizen, Einformen und Ausformen, während der Balgkopf 23 und die Führungsstangen 17 nur in ihre Endstellungen verfahrbar sind. Dabei entspricht die untere Stellung des Balgkopfes 23 der Heizstellung, während die obere Stellung der Einformstellung und der Balgwechselstellung entspricht.

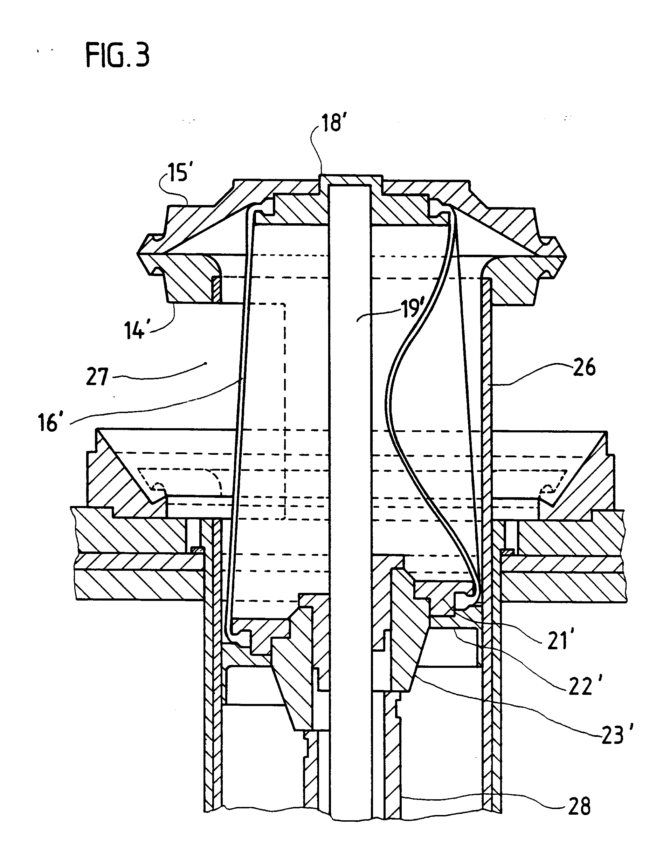

Die in Fig. 3 dargestellte Vulkanisiervorrichtung weicht in einigen Bauteilen sowie in der Verkopplung der Antriebe für die einzelnen Bauteile vom Beispiel der Fig. 1 und 2 ab, hat jedoch den Vorteil, daß sie durch einen Umbau konventioneller, d.h. in den Fabriken bereits vorhandener Vulkanisiervorrichtungen erstellt werden kann.

Fig. 3 zeigt einen senkrechten Schnitt durch die Vorrichtung, wobei sich links die Vorderseite (Beschickungsseite) befindet. Das äußere Oberteil der Vulkanisierform kann dem der Fig. 1 entsprechen und wurde aus Gründen der Übersichtlichkeit weggelassen. Die Vorrichtung weist zur metallisch glatten Abformung von Wulstsitzflächen in einer Trapez-Heizstellung wiederum einen unteren Konturring 14' und einen oberen Konturring 15' auf. Ebenfalls ist ein Heizbalg 16' vorhanden, der mit einem Heizmedium und Vakuum beaufschlagbar ist. Der untere Konturring ist am oberen Rand eines verfahrbaren Brunnenrohrs 26 befestigt, das zumindest auf der Vorderseite mit einer Einschuböffnung für den unteren Wulst eines Reifenrohlings in Form eines Fensters 27 versehen ist. Der obere Konturring 15' befindet sich wiederum an einer Halteplatte 18', die ihrerseits am oberen Ende einer Kolbenstange 19' eines Balgstreckzylinders befestigt ist. Der obere Rand des Heizbalgs 16' ist zwischen der Halteplatte 18' und dem oberen Konturring 15' eingespannt. Die Einspannung des unteren Heizbalgrandes erfolgt durch die Ringe 21' und 22', die sich an einem Balgkopf 23' befinden, der mittels einer Spindel 28 verfahrbar ist. In diesem Beispiel ist für die Öffnung des oberen Heizbalgrandes ein größerer Durchmesser gewählt als für die des unteren, doch können bei Bedarf auch umgekehrte Verhältnisse vorliegen.

Der Balgstreckzylinder mit der Kolbenstange 19' ist an der Spindel 28 befestigt. Die Kolbenstange 19' ist mittels einer nicht gezeichneten Anschlagvorrichtung in ihren Fahrwegen veränderbar, weil der Balgstreckzylinder vorliegend nur in seine Endstellungen verfahrbar ist. Die Bewegungskoordination unterscheidet sich von der des ersten Beispiels dadurch, daß nun bei einem Verfahren des Brunnenrohrs 26 der Balgstreckzylinder mit der Kolbenstange 19′ und dem oberen Konturring 15′ sowie der Balgkopf 23′ mitbewegt werden.

Zum Beschicken der Vorrichtung ist das Brunnenrohr 26 mit dem unteren Konturring 14′ nach oben ausgefahren, so daß der untere Konturring am oberen anliegt. Während des Verfahrens des Brunnenrohrs 26 ist es wichtig, daß zur Vermeidung von Balgschädigungen der Heizbalg 16′ völlig gestreckt und mit Vakuum beaufschlagt oder zumindest drucklos ist. Ein Reifenrohling wird in der bereits beschriebenen Weise unter geringfügiger Ovalverformung des unteren Wulstes über die Konturringe gestülpt, wobei das Fenster 27 dafür sorgt, daß das Brunnenrohr 26 nicht im Wege steht. Im Unterschied zum ersten Beispiel erfolgt das Aufspannen des Rohlings und Einleiten der ersten Bombierstufe dann jedoch dadurch, daß der obere Konturring 15′ und der Balgkopf 23′ nach oben bewegt werden. Anschließend wird das Brunnenrohr 26 mit dem unteren Konturring 14′ in die Vulkanisierstellung gefahren, wobei der obere Konturring 15′, der Heizbalg 16′ und der aufgespannte Rohling mitbewegt werden. Die Heizstellung des unteren Konturrings ist in Fig. 3 gestrichelt dargestellt. Nach dem Schließen der Vulkanisierform wird der Rohling in üblicher Weise vulkanisiert. Nach dem Vulkanisieren und dem Hochfahren des Reifens in seine Entladeposition kann der fertige Reifen von vorne entnommen werden. Zweckmäßig ist es jedoch, auch auf der Rückseite des Brunnenrohrs 26 ein Fenster vorzusehen, so daß eine rückwärtige Entnahme möglich ist.

## Patentansprüche

1. Vulkanisierverfahren für Fahrzeugluftreifen, deren Reifenwülste in montierter Stellung am radial inneren Umfang einer Felge angeordnet sind, wobei der Reifenrohling mit seitlich nach außen geklappten Reifenwülsten vulkanisiert wird, unter Verwendung einer Heizpresse, die übliche Formenteile für die Außenbereiche des Rohlings sowie zwei axial verschiebbare Konturringe (14, 15, 14', 15') Abformung der Innenbereiche der Reifenwülste und einen Heizbalg (16, 16') aufweist, **dadurch gekennzeichnet,** daß zum Beschicken der Heizpresse die Konturringe (14, 15, 14', 15') derart axial zusammen und in eine Position oberhalb der Vulkanisierposition gefahren werden, daß der evakuierte bzw. drucklose Heizbalg (16, 16') durch einen vom unteren Konturring (14, 14') begrenzten Raum nach unten hin wegtaucht, daß danach der Reifenrohling unter geringfügiger Ovalverformung des unteren Reifenwulstes über die Konturringe (14, 15, 14', 15') übergestülpt und anschließend durch axiale Abstandsvergrößerung der Konturringe (14, 15, 14', 15') unter Zentrierung der Wülste auf die Ringe aufgespannt wird, wobei gleichzeitig der Heizbalg (16, 16') in den Rohlingsinnenraum gelangt und daß anschließend der Rohling in die Vulkanisierstellung abgesenkt und die Heizform geschlossen und der Rohling unter Beaufschlagung der Form sowie des Heizbalgs (16, 16') mit einem Heizmedium vulkanisiert wird.

2. Verfahren nach Anspruch 1, dadurch gekennzeichnet, daß zum Erreichen der Beschickungsposition zunächst ein Balgkopf (23), an dem der untere Rand des Heizbalgs (16) befestigt ist, gemeinsam mit den beiden Konturringen (14, 15) in seine obere Position (Bombierposition) gefahren wird, daß anschließend eine Kolbenstange (19) eines Balgstreckzylinders, an der der obere Rand des Heizbalgs (16) sowie der obere Konturring (15) befestigt sind, unter Streckung des Heizbalgs (16) separat angehoben wird und daß schließlich der untere Konturring (14) mit seinem Träger (17) separat an den oberen Konturring (15) herangeführt wird.

3. Verfahren nach Anspruch 1, dadurch gekennzeichnet, daß nach dem Aufspannen des Reifenrohlings auf die Konturringe (14, 15, 14', 15') eine erste Bombierstufe eingeleitet wird, bei der sich die Seitenwände und Wülste des Rohlings ungehindert durch äußere Formenteile aufspannen und setzen.

4. Verfahren nach Anspruch 1, dadurch gekennzeichnet, daß zum Erreichen der Beschickungsposition zunächst ein Träger (26) mit dem unteren Konturring (14') gemeinsam mit einem Balgkopf (23'), an dem der untere Rand des Heizbalgs (16') befestigt ist, und mit einer Kolbenstange (19'), an der der obere Rand des Heizbalgs (16') sowie der obere Konturring (15') befestigt sind, angehoben wird und daß danach oder gleichzeitig der obere Konturring (15') und der Balgkopf (23') abgesenkt werden und daß am Ende der Bewegung die Konturringe (14', 15') aneinanderliegen und der Heizbalg (16') gestreckt in den Raum innerhalb des unteren Konturrings (14') und seines Trägers (26) eintaucht.

5. Verfahren nach Anspruch 1 oder 2, dadurch gekennzeichnet, daß zum Aufspannen der Wülste des Reifenrohlings auf die Konturringe (14, 15,) der untere Konturring (14,) mit seinem Träger (17) abgesenkt wird.

6. Verfahren nach Anspruch 1 oder 4, dadurch gekennzeichnet, daß zum Aufspannen der Wülste des Reifenrohlings auf die Konturringe (14', 15') der obere Konturring (15') mit seiner Kolbenstange (19') angehoben wird und daß gleichzeitig der Balgkopf (23') mit der unteren Balgeinspannung mitbewegt wird.

7. Vorrichtung zur Durchführung des Verfahrens nach Anspruch 1, dadurch gekennzeichnet, daß der obere Konturring (15, 15') und die obere Heizbalgeinspannung direkt oder mittelbar am oberen Ende einer axial verfahrbaren Kolbenstange (19, 19') befestigt ist, daß die untere Heizbalgeinspannung sich an einem ebenfalls axial verschiebbaren Balgkopf (23, 23') befindet, daß der untere Konturring (14, 14') an einem Träger (17, 26) befestigt ist und daß der Träger (17, 26) und der Balgkopf (23, 23') relativ zueinander verschiebbar sind.

8. Vorrichtung nach Anspruch 7, dadurch gekennzeichnet, daß beim Verschieben des Balgkopfes (23) die Kolbenstange (19) und der Träger (17) mittels einer Verkoppelung mitbewegt werden.

9. Vorrichtung nach Anspruch 7, dadurch gekennzeichnet, daß bei einem Verschieben des Trägers (26) die Kolbenstange (19') und der Balgkopf (23') mittels einer Verkoppelung mitbewegt werden.

10. Vorrichtung nach Anspruch 7, dadurch gekennzeichnet, daß der Träger aus vorzugsweise einem metallischen Rohr (26) besteht, das den Balgkopf (23') umgibt.

11. Vorrichtung nach Anspruch 10, dadurch gekennzeichnet, daß sich am metallischen Rohr (26) zumindest auf der Vorderseite eine fensterartige öffnung (27) befindet.

12. Vorrichtung nach Anspruch 7, dadurch gekennzeichnet, daß der Träger aus zumindest zwei Stützsäulen (17) besteht.

13. Vorrichtung nach Anspruch 7, dadurch gekennzeichnet, daß die obere öffnung des Heizbalgs (16) einen größeren oder kleineren Durchmesser aufweist als die untere.

## Claims

1. Vulcanising method for pneumatic vehicle tyres, the tyre beads of which are disposed on the radially inner circumference of a rim in their assembled position, the tyre blank having tyre beads, which are pivoted laterally outwardly, and being vulcanised by utilisation of a heating press which has conventional mould portions for the external regions of the blank as well as two axially displaceable contour rings (14, 15, 14', 15') for shaping the internal regions of the tyre beads and a heating bellows (16, 16'), characterised in that, to load the heating press, the contour rings (14, 15, 14', 15') are brought axially together and move into a position above the vulcanising position in such a manner that the evacuated, i.e. pressureless, heating bellows (16, 16') extends downwardly through a chamber defined by the lower contour ring (14, 14'), in that the tyre blank is then slipped over the contour rings (14, 15, 14', 15') with a slight oval deformation of the lower tyre bead and is subsequently clamped onto the rings by means of an axial enlargement of the spacing between the contour rings (14, 15, 14', 15') whilst centering the beads, the heating bellows (16, 16') simultaneously passing into the blank interior, and in that the blank is subsequently lowered into the vulcanising position, the heating mould is closed, and the blank is vulcanised as a result of the mould and the heating bellows (16, 16') being filled with a heating medium.

2. Method according to claim 1, characterised in that, in order to attain the loading position, a bellows head (23), on which the lower edge of the heating bellows (16) is mounted, is initially moved into its upper position (end-closing position) jointly with the two contour rings (14, 15), in that a piston rod (19) of a bellows stretching cylinder, on which the upper edge of the heating bellows (16) and the upper contour ring (15) are mounted, is subsequently raised separately with the stretching of the heating bellows (16), and in that the lower contour ring (14), with its support member (17), is finally guided separately towards the upper contour ring (15).

3. Method according to claim 1, characterised in that a first end-closing stage is introduced after the tyre blank has been clamped onto the contour rings (14, 15, 14', 15'), in which stage the lateral walls and beads of the blank are clamped-on and placed in position unhindered by external mould portions.

4. Method according to claim 1, characterised in that, in order to attain the loading position, a support member (26) is initially raised with the lower contour ring (14') jointly with a bellows head (23'), on which the lower edge of the heating bellows (16') is mounted, and with a piston rod (19'), on which the upper edge of the heating bellows (16') and the upper contour ring (15') are mounted, and in that the upper contour ring (15') and the bellows head (23') are thereafter or simultaneously lowered, and in that, at the end of the movement, the contour rings (14', 15') lie adjacent one another and the heating bellows (16'), in its stretched form, extends into the space within the lower contour ring (14') and its support member (26).

5. Method according to claim 1 or 2, characterised in that the lower contour ring (14) is lowered with its support member (17) in order to clamp the beads of the tyre blank onto the contour rings (14, 15).

6. Method according to claim 1 or 4, characterised in that the upper contour ring (15') is raised with its piston rod (19') in order to clamp the beads of the tyre blank onto the contour rings (14', 15'), and in that the bellows head (23') is simultaneously moved jointly with the lower means for clamping the bellows in position.

7. Apparatus for implementing the method according to claim 1, characterised in that the upper contour ring (15, 15') and the upper means for clamping the heating bellows in position are directly or indirectly mounted on the upper end of an axially displaceable piston rod (19, 19'), in that the lower means for clamping the heating bellows in position is situated on a bellows head (23, 23'), which is likewise axially displaceable, in that the lower contour ring (14, 14') is mounted on a support member (17, 26), and in that the support member (17, 26) and the bellows head (23, 23') are displaceable relative to each other.

8. Apparatus according to claim 7, characterised in that, during displacement of the bellows head (23), the piston rod (19) and the support member (17) are moved jointly therewith.

9. Apparatus according to claim 7, characterised in that, during a displacement of the support member (26), the piston rod (19') and the bellows head (23') are moved jointly therewith.

10. Apparatus according to claim 7, characterised in that the support member preferably comprises a metal pipe (26) which surrounds the bellows head (23').

11. Apparatus according to claim 10, characterised in that a window-like aperture (27) is situated at least on the front end of the metal pipe (26).

12. Apparatus according to claim 7, characterised in that the support member comprises at least two supporting columns (17).

13. Apparatus according to claim 7, characterised in that the upper aperture in the heating bellows (16) has a greater or smaller diameter than the lower aperture.

## Revendications

1. Procédé de vulcanisation de bandages pneumatiques de véhicules, dont les talons en position de montage sont disposés contre la circonférence radialement intérieure d'une jante, l'ébauche de bandage étant vulcanisée, avec les talons rabattus latéralement vers l'extérieur, au moyen d'une presse chauffante qui comporte les pièces usuelles de moulage des régions extérieures de l'ébauche ainsi que deux anneaux profilés, déplaçables axialement (14, 15, 14', 15'), de moulage des parties intérieures des talons, ainsi qu'une vessie chauffante (16, 16'), caractérisé en ce que pour le chargement de la presse chauffante, les anneaux profilés (14, 15, 14', 15') sont rapprochés axialement l'un de l'autre et mis à une position au-dessus de la position de vulcanisation, en ce que la vessie chauffante dépressurisée ou sans pression (16, 16') s'affaisse vers le bas dans un espace délimité par l'anneau profilé intérieur (14, 14'), en ce qu'ensuite l'ébauche de bandage est enfilée sur les anneaux profilés (14, 15, 14', 15') avec légère déformation ovale du talon inférieur du bandage et finalement est fixée par agrandissement de la distance axiale séparant les anneaux profilés (14, 15, 14', 15') et centrage des talons sur les anneaux, la vessie chauffante (16, 16') parvenant simultanément dans le volume interne de l'ébauche et en ce qu'ensuite l'ébauche est abaissée pour être mise en position de vulcanisation et le moule chauffant est fermé, puis l'ébauche est vulcanisée par envoi d'un fluide de chauffage dans le moule et dans la vessie chauffante (16, 16').

2. Procédé selon la revendication 1, caractérisé en ce que, pour obtenir la position de chargement, une tête (23), à laquelle le bord inférieur de la vessie chauffante (16) est fixé, est amenée avec les deux anneaux profilés (14, 15) à sa position supérieure (position de bombage), en ce qu'ensuite une tige de piston (19) d'un cylindre d'étirage de la vessie, sur laquelle le bord supérieur de la vessie chauffante (16) ainsi que l'anneau profilé supérieur (15) sont fixés, sont soulevés séparément avec étirage de la vessie chauffante (16) et en ce que, finalement, l'anneau profilé inférieur (14) et son support (17) sont rapprochés séparément de l'anneau profilé supérieur (15).

3. Procédé selon la revendication 1, caractérisé en ce qu'après mise en place de l'ébauche du bandage sur les anneaux profilés (14, 15, 14', 15'), une première phase de bombage est déclenchée, au cours de laquelle les flancs et les talons de l'ébauche se mettent en place et se calent sans en être entravés par des pièces extérieures du moule.

4. Procédé selon la revendication 1, caractérisé en ce que, pour obtenir la position de chargement, un support (26) et l'anneau profilé inférieur (14') sont tout d'abord soulevés avec une tête (23') à laquelle le bord inférieur de la vessie chauffante (16') est fixée et avec une tige de piston (19') à laquelle le bord supérieur de la vessie chauffante (16') ainsi que l'anneau profilé supérieur (15') sont fixés et en ce qu'ensuite ou simultanément l'anneau profilé supérieur (15') et la tête (23) sont abaissés et en ce qu'à la fin du mouvement, les anneaux profilés (14', 15') sont appliqués l'un contre l'autre et la vessie chauffante étirée (16') pénètre dans l'espace situé à l'intérieur de l'anneau profilé inférieur (14') et de son support (26).

5. Procédé selon la revendication 1 ou 2, caractérisé en ce que, pour la mise en place des talons de l'ébauche de bandage sur les anneaux profilés (14, 15), l'anneau profilé inférieur (14) est abaissé à l'aide de son support (17).

6. Procédé selon la revendication 1 ou 4, caractérisé en ce que, pour la mise en place des talons de l'ébauche du bandage sur les anneaux profilés (14', 15'), l'anneau profilé supérieur (15') est soulevé par sa tige de piston (19') et en ce que simultanément la tête (23) est déplacée avec la fixation inférieure de la vessie.

7. Dispositif pour la mise en oeuvre du procédé selon la revendication 1, caractérisé en ce que l'anneau profilé supérieur (15, 15') et la fixation supérieure de la vessie chauffante sont fixés directement ou indirectement à l'extrémité supérieure d'une tige de piston (19, 19') déplaçable axialement, en ce que la fixation inférieure de la vessie chauffante se trouve sur une tête (23, 23') également déplaçable axialement, en ce que l'anneau profilé inférieur (14, 14') est fixé sur un support (17, 26) et en ce que le support (17, 26) et la tête (23, 23') sont déplaçables l'un par rapport à l'autre.

8. Dispositif selon la revendication 7, caractérisé en ce que, lors du déplacement de la tête (23), la tige de piston (19) et le support (17) sont également déplacés par un couplage.

9. Dispositif selon la revendication 7, caractérisé en ce que, lors d'un déplacement du support (26), la tige de piston (19') et la tête (23') sont également déplacés au moyen d'un couplage.

10. Dispositif selon la revendication 7, caractérisé en ce que le support consiste de préférence en un tube métallique (26) qui entoure la tête (23').

11. Dispositif selon la revendication 10, caractérisé en ce que le tube métallique (26) comporte au moins sur le côté antérieur une ouverture (27) en forme de fenêtre.

12. Dispositif selon la revendication 7, caractérisé en ce que le support se compose d'au moins deux colonnes de soutien (17).

13. Dispositif selon la revendication 7, caractérisé en ce que l'ouverture supérieure de la vessie chauffante (16) a un diamètre plus grand ou plus petit que celui de l'ouverture inférieure.
